# EUROPEAN PATENT SPECIFICATION

(11) **EP 3 998 602 B1**
(45) Date of publication and mention of the grant of the patent: **18.09.2024**
(21) Application number: 20837052.8
(22) Date of filing: 03.07.2020
(51) Int. Cl.: G10K 11/16, G06F 1/16, H04R 1/28

(54) **TERMINAL DEVICE**
ENDGERÄT
DISPOSITIF TERMINAL

(30) Priority: 08.07.2019 CN 201910610787
(43) Date of publication of application: 18.05.2022
(73) Proprietor: Vivo Mobile Communication Co., Ltd., Dongguan, Guangdong 523860 (CN)
(72) Inventor: JIANG, Guozhu, Dongguan, Guangdong 523860 (CN); LONG, Lifeng, Dongguan, Guangdong 523860 (CN)
(74) Representative: Murgitroyd & Company
(86) International application number: PCT/CN2020/100171
(87) International publication number: WO 2021/004394

(56) References cited:
- EP-A1- 2 552 127
- CN-A- 102 480 538
- CN-A- 108 513 241
- CN-A- 110 428 799
- CN-U- 202 889 436
- CN-U- 206 629 228
- US-A1- 2012 288 130

## Description

### CROSS-REFERENCE TO RELATED APPLICATION

This application claims priority to Chinese Patent Application No. 201910610787.6 filed in China on July 8, 2019.

### TECHNICAL FIELD

The present disclosure relates to the field of communications device technologies, and in particular, to a terminal device.

### BACKGROUND

With the advancement of fifth-generation (5G) technologies, terminal devices have put forward higher requirements on radio frequency and antenna layout environments. As an antenna clearance increases, correspondingly increased antenna springs occupy an area, in which a microphone is originally installed, at a bottom edge of a motherboard. This causes a position of the microphone to be moved further inward, and consequently, the microphone needs to pass through a longer sound guide channel to connect to a sound collecting hole on a device housing. A length of the sound guide channel determines a resonance frequency of the microphone, and an increased length of the sound guide channel causes the microphone to form a relatively sharp resonance peak near the resonance frequency. After the microphone picks up sound, it usually enters a digital-to-analog converter (ADC) for encoding after gain amplification. When the resonance frequency is within a narrowband/broadband operating frequency range of the terminal device, sensitivity near the resonant peak of the microphone exceeds a threshold of the ADC and amplitude limiting is caused, which eventually causes severe recording distortion.

Usually, a dust-proof net with a large acoustic resistance or a plurality of dust-proof nets are selected to reduce the resonance peak, but have a limited effect, and a dust-proof net with a large acoustic resistance increases a risk of hole blocking.

EP 2552127A1 discloses a microphone unit (1).The microphone unit (1) is provided with a casing (10) that houses a first oscillation unit (13) and a second oscillation unit (15) and that is provided with a first sound hole (23) and a second sound hole (25). The casing (10) contains a mounting section (11) that has a mounting surface (11a) to which the first oscillation unit (13) and the second oscillation unit (15) are mounted, and that is provided with the first sound hole (23) and the second sound hole (25) on the back surface (11b) of the mounting surface (11a); and the casing (10) is provided with a first sound path (41) that transmits sound waves input from the first sound hole (23) to one surface of a first oscillation plate (134) and to one surface of a second oscillation plate (154), and a second sound path (42) that transmits sound waves input from the second sound hole (25) to the other surface of the second oscillation plate (154). The other surface of the first oscillation plate (134) faces a hermetically sealed space that is formed within the casing (10).

### SUMMARY

The present disclosure discloses a terminal device, so as to solve a problem of relatively poor recording quality caused because a resonance peak cannot be suppressed when a speaker of a terminal device operates.

To solve the foregoing problem, the following technical solutions are used in the present disclosure.

A terminal device is provided, which is defined in claim 1

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

The accompanying drawings described herein are used to provide a further understanding of the present disclosure and constitute a part of the present disclosure. The illustrative embodiments of the present disclosure and descriptions thereof are used to explain the present disclosure, and do not constitute any improper limitation on the present disclosure.
FIG. 1 is a cutaway drawing of a partial structure of a terminal device disclosed in some embodiments of the present disclosure;
FIG. 2 is a solid figure of a partial structure of a terminal device disclosed in some embodiments of the present disclosure; and
FIG. 3 is another cutaway drawing of a partial structure of a terminal device disclosed in some embodiments of the present disclosure.

Reference signs:
100: housing, 110: middle frame, 111: sound collecting hole, 200: microphone;
300: vibration plate, 400: sound guide support, 410: sound guide groove, 420: mounting groove, 500: circuit board, 510: connecting hole:
600: mounting bracket, 610: mounting hole;
700: sealing member, 800: sound film, 900: screen assembly, A: first cavity, A1: sound guide channel, A2: second cavity.

### DESCRIPTION OF EMBODIMENTS

To make the objectives, technical solutions, and advantages of the present disclosure clearer, the following clearly and completely describes the technical solutions of the present disclosure with reference to specific embodiments of the present disclosure and the accompanying drawings. Apparently, the described embodiments are merely some rather than all of the embodiments of the present disclosure.

The following describes in detail the technical solutions disclosed in the embodiments of the present disclosure with reference to the accompanying drawings.

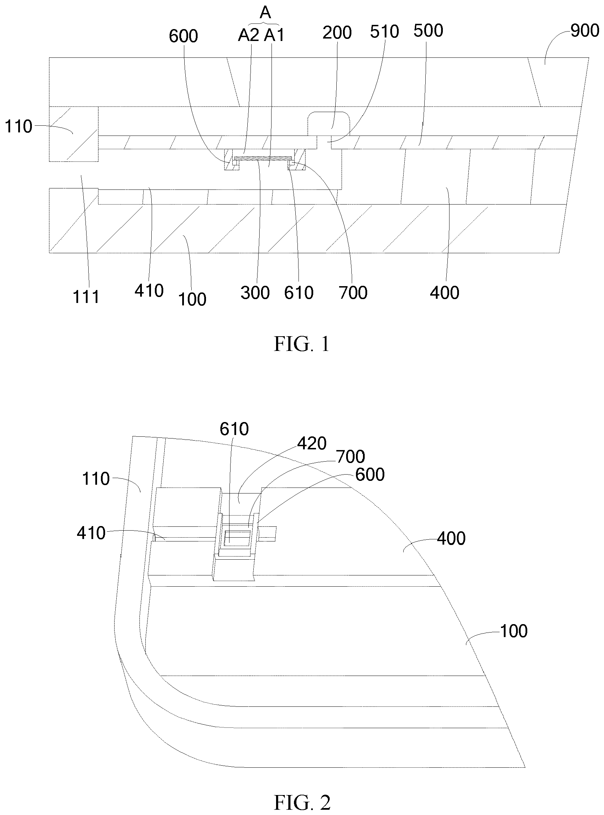

Refer to FIG. 1 to FIG. 3. The invention discloses a terminal device. The disclosed terminal device includes a housing 100, a microphone 200, a sound guide support 400, a circuit board 500, and a vibration assembly.

The housing 100 is a basic component of the terminal device, and the housing 100 can provide an installation foundation for other components of the terminal device. The housing 100 is provided with a sound collecting hole 111, which is used by the microphone 200 to collect sound. The sound collecting hole 111 may be disposed on a plurality of positions of the housing 100. Usually, the housing 100 includes a middle frame 110, and the sound collecting hole 111 may be disposed in the middle frame 110. Certainly, the sound collecting hole 111 may alternatively be disposed on another position of the housing 100. In some embodiments of the present disclosure, a specific position for arrangement of the sound collecting hole 111 is not limited.

The sound guide support 400 and the circuit board 500 are both disposed in the housing 100. Specifically, the sound guide support 400 and the circuit board 500 may usually be fixed in the housing 100. The sound guide support 400 cooperates with the circuit board 500 to form a first cavity.

The vibration assembly is disposed between the sound guide support 400 and the circuit board 500. The vibration assembly separates the first cavity A formed by the sound guide support 400 and the circuit board 500 into a sound guide channel A1 and a second cavity A2. The microphone 200 is a sound collecting component of the terminal device. The microphone 200 is disposed in the housing 100. The microphone 200 and the sound collecting hole 111 are respectively disposed at both ends of the sound guide channel A1. In a specific working process, sound in an environment of the terminal device can pass through the sound collecting hole 111 and the sound guiding channel A1, and is finally transmitted to the microphone 200, so as to implement sound collecting of the microphone 200.

According to the terminal device, first cavity A is formed between the sound guide support 400 and the circuit board 500, and the vibration assembly separates the first cavity A into the sound guide channel A1 and the second cavity A2, so that the sound guide channel A1 and the second cavity A2 form a parallel resonant structure. The parallel resonant structure can form notch filtering at a resonant peak of the sound guide channel A1, thereby achieving suppression of the resonant peak. The terminal device solves a problem that relatively poor recording quality caused because a resonance peak cannot be suppressed when a speaker of the terminal device operates.

In an optional scheme, an inner wall of the sound guide channel A1 can be provided with a surface coating, and the surface coating can play a role in loss of excessively high frequency when the sound guide channel A1 resonates. It can be learned from the foregoing description that the terminal device disclosed in some embodiments of the present disclosure can achieve a more balanced microphone frequency response curve and relatively high recording sound quality, and avoid problems of noise, distortion, and the like caused because a resonance peak when the microphone 200 is recording is excessively high and consequently exceeds a threshold of an ADC.

As described above, the sound guide support 400 cooperates with the circuit board 500 to form the first cavity A. There may be a plurality of types of structures of the sound guide support 400. The sound guide support 400 is provided with a sound guide groove 410, and the circuit board 500 covers a notch of the sound guide groove 410. The circuit board 500 and the sound guide groove 410 are connected to form the first cavity A. In the foregoing preferred scheme, the structure is relatively simple, and a manner of forming the first cavity A is relatively easy to implement.

To facilitate electrical connection and sound collecting of the microphone 200, the microphone 200 is usually disposed on a side, away from the sound guide support 400, of the circuit board 500. The housing 100 is provided with a screen assembly 900, and the microphone 200 is usually located on an inner side of the screen assembly 900. Specifically, the microphone 200 may be fixed through conductive adhesive or soldering on the side, away from the sound guide support 400, of the circuit board 500, so that the circuit board 500 implements power supply. In this case, the circuit board 500 may be provided with a connecting hole 510, and the microphone 200 communicates with the sound guide channel through the connecting hole 510, so as to ensure normal operation of sound collection.

As described above, the vibration assembly is disposed between the sound guide support 400 and the circuit board 500, and there are a plurality of manners of mounting the vibration assembly. Refer to FIG. 1 and FIG. 2. The sound guide support 400 further has a mounting groove 420, the mounting groove 420 intersects the sound guide groove 410, the vibration assembly includes a mounting bracket 600 and a vibration plate 300, and the mounting bracket 600 is disposed in the mounting groove 420. A portion of the mounting bracket 600 extends into the sound guide groove 410 through the notch of the sound guide groove 410, the portion of the mounting bracket 600 extending into the sound guide groove 410 is provided with a mounting hole 610, the mounting hole 610 communicates with the sound guide groove 410, and the vibration plate 300 blocks the mounting hole 610. The vibration plate 300, the mounting bracket 600, and the circuit board 500 seal the notch of the sound guide groove 410, and together with the sound guide groove 410, form the sound guide channel A1. The circuit board 500, the mounting bracket 600, and the vibration plate 300 form the second cavity A2. The parts are assembled in the foregoing manner, so that the sound guide channel A1 and the second cavity A2 can be formed more conveniently.

The mounting bracket 600 is a groove-shaped structural member, the groove-shaped structural member may be mounted in the mounting groove 420, the mounting groove penetrates the sound guide support, and both ends of the mounting groove 420 may be open ends extending to edges of the sound guide support 400. The groove-shaped structural member may be disposed between the circuit board 500 and the sound guide support 400, and an area, opposite to the sound guide groove 410, in the groove-shaped structural member may be provided with the mounting hole 610. In this case, the mounting bracket 600 using the groove-shaped structural member facilitates forming the second cavity A2, and further, the mounting groove 420 of the groove-shaped structural member is a through structure so that a vibration process of the vibrating assembly is vibration without being interfered with by air pressure.

In order to facilitate disassembly and assembly, in an optional scheme, the mounting bracket 600 may be fixed in the mounting groove 420 in a snap-fit manner. Certainly, the mounting bracket 600 can alternatively be fixed in the mounting groove 420 through a connecting member (for example, a threaded connecting member).

There are a plurality of manners of cooperation between the vibration plate 300 and the mounting hole 610. In an optional scheme, the vibration plate 300 may be fixed in a lap joint manner on an edge of the mounting hole 610. Such a lap joint assembly manner is easier to assemble. In order to ensure tightness of the sound guide channel A1, in an optional scheme, a sealing member 700 may be disposed between the vibration plate 300 and the edge of the mounting hole 610. The sealing member 700 can play a role of sealing and avoid a problem that the vibration plate 300 is not tightly sealed.

There may be a plurality of types of structures of the sealing member 700. In an optional scheme, the sealing member 700 may include a sealing tape and foam, and the vibration plate 300 blocks the mounting hole 610 through the sealing tape and the foam. The foam can support the vibration plate 300 for up and down vibrations. Specifically, the sealing tape and the foam may be bonded and fixed, and finally the vibration plate 300 is bonded to the edge of the mounting hole 610.

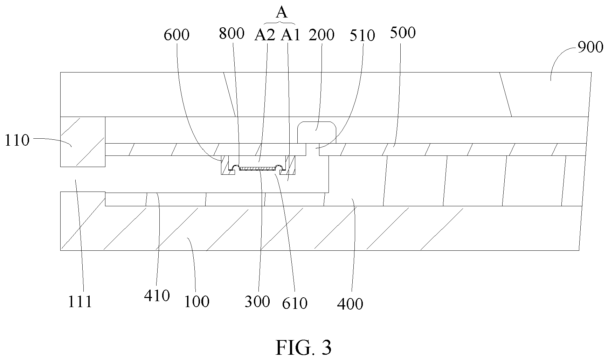

Certainly, the vibration plate 300 may alternatively be mounted in another way. Refer to FIG. 3. In an optional scheme, an area of the vibration plate 300 may be smaller than an area of the mounting hole 610, and the vibration plate 300 is covered with a sound film 800. The vibration plate 300 may be fixed on the mounting bracket 600 through the sound film 800, and an entirety formed by the vibration plate 300 and the sound film 800 blocks the mounting hole 610. In this case, the vibration plate 300 is more similar to a mass block, so that the entirety formed by the vibration plate 300 and the sound film 800 has an obvious vibration effect, achieving a better resonance peak suppression effect.

In an optional scheme, a sound absorbing structural member such as soundproofing cotton may be disposed in the sound guide channel A1. Arranging soundproofing cotton in the sound guide channel A1 can increase acoustic resistance of the sound guide channel A1, so as to reduce a resonance peak of the sound guide channel A1, so that the microphone 200 has a relatively flat response curve, and finally suppression of the resonance peak can be achieved, thereby enhancing a sound collection effect. In addition, the sound film 800 can ensure compliance of vibration.

The terminal device disclosed in some embodiments of the present disclosure may be a terminal device such as a mobile phone, a tablet computer, an ebook reader, a game console, a wearable device (such as a smart watch). In some embodiments of the present disclosure, a specific type of the terminal device is not limited.

The foregoing embodiments of the present disclosure focus on differences between various embodiments. Different optimization features of the various embodiments can be combined to form a better embodiment as long as they are not contradictory. Considering conciseness of description, details are not described herein.

The foregoing descriptions are merely embodiments of the present disclosure, but are not intended to limit the present disclosure. For a person skilled in the art, various modifications and changes may be made to the present disclosure.

## Claims

1. A terminal device, comprising a housing (100), a microphone (200), a sound guide support (400), a circuit board (500), and a vibration assembly, wherein the housing (100) is provided with a sound collecting hole (111), the sound guide support (400) and the circuit board (500) are disposed in the housing (100), the sound guide support (400) and the circuit board (500) form a first cavity (A), the vibration assembly is disposed between the sound guide support (400) and the circuit board (500) and separates the first cavity (A) into a sound guide channel (A1) and a second cavity (A2), and the microphone (200) and the sound collecting hole (111) are respectively disposed at both ends of the sound guide channel (A1); **characterized in that**
the sound guide support (400) is provided with a sound guide groove (410), the circuit board (500) covers a notch of the sound guide groove (410), the circuit board (500) and the sound guide groove (410) are connected to form the first cavity (A); and
the sound guide support (400) further comprises a mounting groove (420), the mounting groove (420) intersects the sound guide groove (410), the vibration assembly comprises a mounting bracket (600) and a vibration plate (300), the mounting bracket (600) is disposed in the mounting groove (420), a portion of the mounting bracket (600) extends into the sound guide groove (410) through the opening part of the sound guide groove (410), the portion of the mounting bracket (600) extending into the sound guide groove (410) is provided with a mounting hole (610), the mounting hole (610) communicates with the sound guide groove (410), the vibration plate (300) blocks the mounting hole (610), and the vibration plate (300), the mounting bracket (600), and the circuit board (500) seal the notch of the sound guide groove (410), and together with the sound guide groove (410), form the sound guide channel (A1); and the vibration plate (300), the mounting bracket (600) and the circuit board (500) form the second cavity (A2).

2. The terminal device according to claim 1, wherein the circuit board (500) is provided with a connecting hole (510), and the microphone (200) is disposed on a side, away from the sound guide support (400), of the circuit board (500), and communicates with the sound guide channel (A1) through the connecting hole (510).

3. The terminal device according to claim 1, wherein the mounting bracket (600) is a groove-shaped structural member, the groove-shaped structural member is mounted in the mounting groove (420), the mounting groove (420) penetrates the sound guide support (400), both ends of the mounting groove (420) are open ends, the groove-shaped structural member is disposed between the circuit board (500) and the sound guide support (400), and an area, opposite to the sound guide groove (410), in the groove-shaped structural member is provided with the mounting hole (610).

4. The terminal device according to claim 3, wherein the mounting bracket (600) is fixed in the mounting groove (420) in a snap-fit manner.

5. The terminal device according to claim 1, wherein the vibration plate (300) is fixed in a lap joint manner on an edge of the mounting hole (610).

6. The terminal device according to claim 5, wherein a sealing member (700) is disposed between the vibration plate (300) and the edge of the mounting hole (610).

7. The terminal device according to claim 6, wherein the sealing member (700) comprises a sealing tape and foam, and the vibration plate (300) blocks the mounting hole (610) through the sealing tape and the foam.

8. The terminal device according to claim 1, wherein an area of the vibration plate (300) is smaller than an area of the mounting hole (610), the vibration plate (300) is covered with a sound film (800), the vibration plate (300) is fixed on the mounting bracket (600) through the sound film (800), and an entirety formed by the vibration plate (300) and the sound film (800) blocks the mounting hole (610).

9. The terminal device according to claim 1, wherein the housing (100) comprises a middle frame (110), and the sound collecting hole (111) is disposed in the middle frame (110).

10. The terminal device according to any one of claims 1 to 9, wherein a sound absorbing structural member is disposed in the sound guide channel (A1).

## Patentansprüche

1. Ein Endgerät, das ein Gehäuse (100), ein Mikrofon (200), einen Schallführungsträger (400), eine Leiterplatte (500) und eine Vibrationsanordnung beinhaltet, wobei das Gehäuse (100) mit einem Schallsammelloch (111) versehen ist, der Schallführungsträger (400) und die Leiterplatte (500) in dem Gehäuse (100) angeordnet sind, der Schallführungsträger (400) und die Leiterplatte (500) einen ersten Hohlraum (A) bilden, die Vibrationsanordnung zwischen dem Schallführungsträger (400) und der Leiterplatte (500) angeordnet ist und den ersten Hohlraum (A) in einen Schallführungskanal (A1) und einen zweiten Hohlraum (A2) unterteilt, und das Mikrofon (200) und das Schallsammelloch (111) jeweils an den beiden Enden des Schallführungskanals (A1) angeordnet sind; **dadurch gekennzeichnet, dass** der Schallführungsträger (400) mit einer Schallführungsnut (410) versehen ist, die Leiterplatte (500) eine Kerbe der Schallführungsnut (410) abdeckt, die Leiterplatte (500) und die Schallführungsnut (410) verbunden sind, um den ersten Hohlraum (A) zu bilden; und
der Schallführungsträger (400) ferner eine Montagenut (420) beinhaltet, die Montagenut (420) die Schallführungsnut (410) schneidet, die Vibrationsanordnung einen Montagewinkel (600) und eine Vibrationsplatte (300) beinhaltet, der Montagewinkel (600) in der Montagenut (420) angeordnet ist, ein Abschnitt des Montagewinkels (600) sich durch den Öffnungsteil der Schallführungsnut (410) in die Schallführungsnut (410) erstreckt, der Abschnitt des Montagewinkels (600), der sich in die Schallführungsnut (410) erstreckt, mit einem Montageloch (610) versehen ist, das Montageloch (610) mit der Schallführungsnut (410) in Verbindung steht, die Vibrationsplatte (300) das Montageloch (610) blockiert, und die Vibrationsplatte (300),
der Montagewinkel (600) und die Leiterplatte (500) die Kerbe der Schallführungsnut (410) abdichten und zusammen mit der Schallführungsnut (410) den Schallführungskanal (A1) bilden; und die Vibrationsplatte (300), der Montagebügel (600) und die Leiterplatte (500) den zweiten Hohlraum (A2) bilden.

2. Endgerät gemäß Anspruch 1, wobei die Leiterplatte (500) mit einem Verbindungsloch (510) versehen ist, und das Mikrofon (200) auf einer vom Schallführungsträger (400) abgewandten Seite der Leiterplatte (500) angeordnet ist und durch das Verbindungsloch (510) mit dem Schallführungskanal (A1) in Verbindung steht.

3. Endgerät gemäß Anspruch 1, wobei der Montagewinkel (600) ein nutförmiges Bauteil ist, das nutförmige Bauteil in der Montagenut (420) montiert ist, die Montagenut (420) den Schallführungsträger (400) durchdringt, beide Enden der Montagenut (420) offene Enden sind, das nutförmige Bauteil zwischen der Leiterplatte (500) und dem Schallführungsträger (400) angeordnet ist und eine der Schallführungsnut (410) gegenüberliegende Fläche in dem nutförmigen Bauteil mit dem Montageloch (610) versehen ist.

4. Endgerät gemäß Anspruch 3, wobei der Montagewinkel (600) in der Montagenut (420) einrastend fixiert ist.

5. Endgerät gemäß Anspruch 1, wobei die Vibrationsplatte (300) an einem Rand des Montagelochs (610) überlappend fixiert ist.

6. Endgerät gemäß Anspruch 5, wobei zwischen der Vibrationsplatte (300) und dem Rand des Montagelochs (610) ein Dichtungselement (700) angeordnet ist.

7. Endgerät gemäß Anspruch 6, wobei das Dichtungselement (700) ein Dichtungsband und Schaumstoff beinhaltet, und die Vibrationsplatte (300) das Montageloch (610) durch das Dichtungsband und den Schaumstoff blockiert.

8. Endgerät gemäß Anspruch 1, wobei eine Fläche der Vibrationsplatte (300) kleiner als eine Fläche des Montagelochs (610) ist, die Vibrationsplatte (300) mit einer Schallfolie (800) abgedeckt ist, die Vibrationsplatte (300) durch die Schallfolie (800) hindurch an dem Montagewinkel (600) fixiert ist und eine Gesamtheit, die von der Vibrationsplatte (300) und der Schallfolie (800) gebildet ist, das Montageloch (610) blockiert.

9. Endgerät gemäß Anspruch 1, wobei das Gehäuse (100) einen Mittelrahmen (110) beinhaltet, und das Schallsammelloch (111) in dem Mittelrahmen (110) angeordnet ist.

10. Endgerät gemäß einem der Ansprüche 1 bis 9, wobei in dem Schallführungskanal (A1) ein schallabsorbierendes Bauteil angeordnet ist.

## Revendications

1. Un dispositif terminal, comprenant un boîtier (100), un microphone (200), un support guide sonore (400), une carte de circuit imprimé (500), et un ensemble vibratoire, où le boîtier (100) est pourvu d'un trou collecteur sonore (111), le support guide sonore (400) et la carte de circuit imprimé (500) sont disposés dans le boîtier (100), le support guide sonore (400) et la carte de circuit imprimé (500) forment une première cavité (A), l'ensemble vibratoire est disposé entre le support guide sonore (400) et la carte de circuit imprimé (500) et sépare la première cavité (A) en un canal guide sonore (A1) et une seconde cavité (A2), et le microphone (200) et le trou collecteur sonore (111) sont respectivement disposés aux deux extrémités du canal guide sonore (A1) ; **caractérisé en ce que**
le support guide sonore (400) est pourvu d'une rainure guide sonore (410), la carte de circuit imprimé (500) couvre une entaille de la rainure guide sonore (410), la carte de circuit imprimé (500) et la rainure guide sonore (410) sont raccordées pour former la première cavité (A) ; et
le support guide sonore (400) comprend en outre une rainure de montage (420), la rainure de montage (420) intersecte la rainure guide sonore (410), l'ensemble vibratoire comprend un appui de montage (600) et une plaque vibratoire (300), l'appui de montage (600) est disposé dans la rainure de montage (420), une portion de l'appui de montage (600) s'étend dans la rainure guide sonore (410) par l'intermédiaire de la partie d'ouverture de la rainure guide sonore (410), la portion de l'appui de montage (600) s'étendant dans la rainure guide sonore (410) est pourvue d'un trou de montage (610), le trou de montage (610) communique avec la rainure guide sonore (410), la plaque vibratoire (300) bloque le trou de montage (610), et la plaque vibratoire (300), l'appui de montage (600), et la carte de circuit imprimé (500) scellent l'entaille de la rainure guide sonore (410), et conjointement avec la rainure guide sonore (410), forment le canal guide sonore (A1) ; et la plaque vibratoire (300), l'appui de montage (600) et la carte de circuit imprimé (500) forment la seconde cavité (A2).

2. Le dispositif terminal selon la revendication 1, où la carte de circuit imprimé (500) est pourvue d'un trou de raccordement (510), et le microphone (200) est disposé sur un côté, éloigné du support guide sonore (400), de la carte de circuit imprimé (500), et communique avec le canal guide sonore (A1) par l'intermédiaire du trou de raccordement (510).

3. Le dispositif terminal selon la revendication 1, où l'appui de montage (600) est un élément structural en forme de rainure, l'élément structural en forme de rainure est monté dans la rainure de montage (420), la rainure de montage (420) pénètre dans le support guide sonore (400), les deux extrémités de la rainure de montage (420) sont des extrémités ouvertes, l'élément structural en forme de rainure est disposé entre la carte de circuit imprimé (500) et le support guide sonore (400), et une surface, opposée à la rainure guide sonore (410), dans l'élément structural en forme de rainure est pourvue du trou de montage (610).

4. Le dispositif terminal selon la revendication 3, où l'appui de montage (600) est fixé dans la rainure de montage (420) au moyen d'ajustement à encliquetage.

5. Le dispositif terminal selon la revendication 1, où la plaque vibratoire (300) est fixé au moyen de joint à recouvrement sur un bord du trou de montage (610).

6. Le dispositif terminal selon la revendication 5, où un élément de scellement (700) est disposé entre la plaque vibratoire (300) et le bord du trou de montage (610).

7. Le dispositif terminal selon la revendication 6, où l'élément de scellement (700) comprend un ruban de scellement et de la mousse, et la plaque vibratoire (300) bloque le trou de montage (610) par l'intermédiaire du ruban de scellement et de la mousse.

8. Le dispositif terminal selon la revendication 1, où une surface de la plaque vibratoire (300) est plus petite qu'une surface du trou de montage (610), la plaque vibratoire (300) est couverte avec un film sonore (800), la plaque vibratoire (300) est fixée sur l'appui de montage (600) par l'intermédiaire du film sonore (800), et une intégralité formée par la plaque vibratoire (300) et le film sonore (800) bloque le trou de montage (610).

9. Le dispositif terminal selon la revendication 1, où le boîtier (100) comprend un cadre médian (110), et le trou collecteur sonore (111) est disposé dans le cadre médian (110).

10. Le dispositif terminal selon l'une quelconque des revendications 1 à 9, où un élément structural insonorisant est disposé dans le canal guide sonore (A1).
